# EUROPÄISCHE PATENTSCHRIFT

(11) **EP 2 104 190 B1**
(45) Veröffentlichungstag und Bekanntmachung des Hinweises auf die Patenterteilung: **04.12.2013**
(21) Anmeldenummer: 08170586.5
(22) Anmeldetag: 30.10.2006
(51) Int. Cl.: H01R 31/06, H01R 13/627, G02B 6/38, H01R 24/00

(54) **Adapter zur Aufnahme eines Steckerteiles**
Adapter to accept a plug-in part
Adaptateur destiné à la réception d'une fiche mâle

(30) Priorität: 09.11.2005 DE 202005017471 U; 22.04.2006 DE 202006006606 U; 03.08.2006 DE 202006011910 U
(43) Veröffentlichungstag der Anmeldung: 23.09.2009
(62) Teilanmeldung aus: 06123126.2
(73) Patentinhaber: Weidmüller Interface GmbH & Co. KG, 32758 Detmold (DE)
(72) Erfinder: Muhs, Andreas, 34434 Borgentreich (DE); Hanning, Claudia, 32758 Detmold (DE); Ziemke, Jürgen, 32760 Detmold (DE); Höing, Michael, 32657 Lemgo (DE); Schnatwinkel, Michael, 32051 Herford (DE); Mücke, Michaela, 32756 Detmold (DE); Seereiner, Simon, 33602 Bielefeld (DE); Lütkemeier, Ulrich, 32758 Detmold (DE)
(74) Vertreter: Dantz, Jan Henning

(56) Entgegenhaltungen:
- WO-A-03/012932
- DE-A1-102004 004 229
- DE-B3- 10 236 275
- US-A1- 2003 148 652
- US-A1- 2005 064 752

## Beschreibung

Die Erfindung betrifft einen Adapter zur Aufnahme eines Steckerteiles nach dem Oberbegriff des Anspruchs 1.

Adapter der gattungsgemäßen Art ermöglichen den Einsatz der in sie eingesetzten Steckerteile auch in rauerer Umgebung - beispielsweise in Produktionsanlagen oder Fahrzeugen - durch Erreichen einer im Vergleich zur Schutzklasse des Steckerteils höheren Schutzklasse wie z.B. IP65 oder IP67.

Eine gattungsgemäße Anordnung für einen Telefonstecker ist aus der US 4,349,236 (Bell Telephone Laboratories) bekannt Die Druckschrift US 2003/0148652 A1 offenbart hingegen einen gattungsgemäßen Netzwerkstecker nach dem Oberbegriff des Anspruchs 1, bei dem ein an einem Kabel angeordneter Steckverbinder mittels eines Adapters so in einem Gehäuse angeordnet wird, dass die Anordnung eine große Dichtheit gewährleistet. Dabei ist der Adapter im Gehäuse gegen Verschieben gesichert.

Weiterentwickelt bzw. verankert wurde die Idee des Erreichens höher Anforderungen aus Umgebungsklassifikationen in der IEC 61067-3-106 Variante 4, in der EN 50173-1:2005, in der ISO/IEC 24702 und in der IEC 61918.

Eine Möglichkeit zur Realisierung dieser Normen zeigt die DE 102 36 275 B3. Diese bekannte Konstruktion weist allerdings das Problem auf, dass sie nur für die Übertragung elektrischer Signale geeignet ist und dass es in der Regel einer Bauraumvergrößerung bedarf, um die Lösung auch für andere Steckerteile, z.B. der Lichtleitertechnik (beispielsweise mit SC-Simplex-Einsätzen insbesondere im Abstand 7,35 mm), nutzen zu können. Die bekannte Konstruktion sollte zudem in Hinsicht auf hohe mechanische und chemische Belastungen verbessert werden, denen sie nicht optimal gerecht wird.

Die Erfindung hat daher die Aufgabe, einen verbesserten Adapter zu schaffen, mit dem es möglich ist, mit einfachen konstruktiven Mitteln hohen mechanischen und chemischen Beanspruchungen und Anforderungen gerecht zu werden.

Vorzugsweise soll dabei auch auf einfache Weise eine Aufnahme von Steckerteilen verschiedener Ausgestaltung möglich sein, ohne den Adapter verändern zu müssen. Wünschenswert wäre vorzugsweise eine Nutzbarkeit für:
- Stecker der Datenübertragungstechnik mit Kupfer und/oder Lichtwellenleitern, insbesondere für Ethernet- und Feldbussysteme;
- Stecker der Energieversorgungstechnik mit Kupfer- und/oder Druckluftleitungen; und
- Stecker der Signalübertragungstechnik mit Kupferleitern, insbesondere für Sensoren und/oder Aktoren.

Ferner soll der Stecker, insbesondere für lichtleitende Kabel, kupplungsfrei an ein Transceivergehäuse anschließbar sein.

Die Erfindung löst die oben genannte Aufgabe durch den Gegenstand des Anspruchs 1.

Vorteilhafte Ausgestaltungen sind den Unteransprüchen zu entnehmen.

Vorteilhafterweise ist das wenigstens eine Steckerteil in einen Hilfsrahmen eingesetzt, welcher in das Aufnahmegehäuse einsetzbar ist. Der Hilfsrahmen ermöglicht es, auf einfachste Weise verschiedene Steckerelemente in einheitlich gestaltete Aufhahmegehäuse einzusetzen. Die Notwendigkeit zur Bereithaltung verschiedener Aufnahmegehäuse entfällt damit.

Weiterhin ist die optische Ebene des Steckerteils derart am Adapter ausgebildet, dass ein kupplungsstückfreier Anschluss der lichtführenden Medien (Glas, HCS, POF) zu einem Transceivergehäuse realisierbar ist.

Die Erfindung setzt nach ihren Varianten zudem an der genormten Konstruktion an und entwickelt sie insbesondere im Bereich des abzudichtenden Bereiches zwischen der Mutter der Kabeldurchführung und der Schiebehülse mit einfachen Mitteln in entscheidender Weise derart weiter, dass eine hohe Dichtigkeit und eine mechanische und chemische Resistenz erreicht wird.

Der Adapter ist zudem für Steckerteile verschiedenster Art nutzbar, ohne dass zum Erreichen einer hohen Schutzklasse wie IP65 oder IP67 die Konstruktion grundsätzlich geändert werden müsste.

Es ist gegebenenfalls lediglich notwendig, den Hilfsrahmen zu verwenden oder Teile des Adapters aus einem bestimmten Material zu fertigen. So können viele der Teile des Adapters entweder aus Kunststoff oder Metall gefertigt werden. Je nach Anforderungsprofil wird die optimale Materialauswahl getroffen.

Nachfolgend wird die Erfindung unter Bezug auf die Zeichnung anhand von Ausführungsbeispielen näher erläutert, wobei auch weitere Vorteile der Erfindung deutlich werden. Es zeigt:
- Fig. 1: eine erste perspektivische Ansicht eines Adapterteils, in das ein erstes Datenverarbeitungs-Steckerteil mit elektrischen Kontakten aus dem Büroumfeld eingesetzt ist;
- Fig. 2: eine Sprengansicht von Elementen der Anordnung aus Fig. 1;
- Fig. 3: eine erste perspektivische Ansicht eines Adapterteils, in das ein zweites Steckerteil mit elektrischen Kontakten aus dem Industrieumfeld eingesetzt ist;
- Fig. 4: eine Sprengansicht von Elementen der Anordnung aus Fig. 3;
- Fig. 5: eine erste perspektivische Ansicht eines Adapterteils, in das ein LC-Steckerteil für Kabel mit Lichtwellenleitern eingesetzt ist;
- Fig. 6: eine Sprengansicht von Elementen der Anordnung aus Fig. 5;
- Fig. 7: eine erste perspektivische Ansicht eines Adapterteils, in das ein SC-Steckerteil für Kabel mit Lichtwellenleitern eingesetzt ist;
- Fig. 8: eine Sprengansicht von Elementen der Anordnung aus Fig. 7;
- Fig. 9-11: verschiedene Sprengansichten von Elementen des Adapters aus Fig. 1 aus unterschiedlichen Richtungen; und
- Fig. 12, 13: eine perspektivische Ansicht und eine Schnittansicht des zusammengebauten Adapters aus Fig. 1 - 11; und

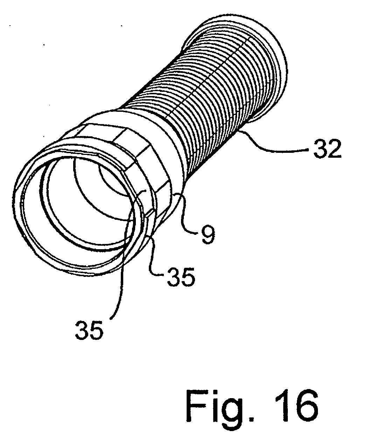

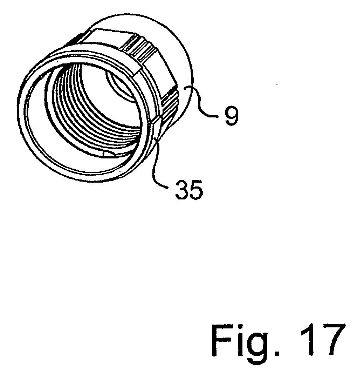

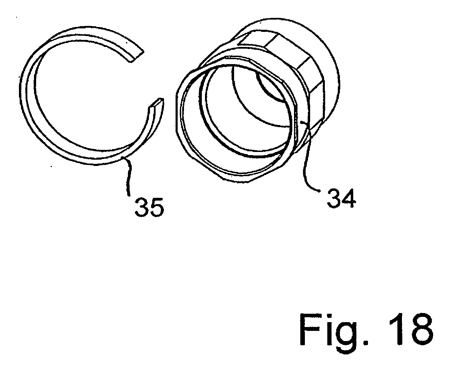

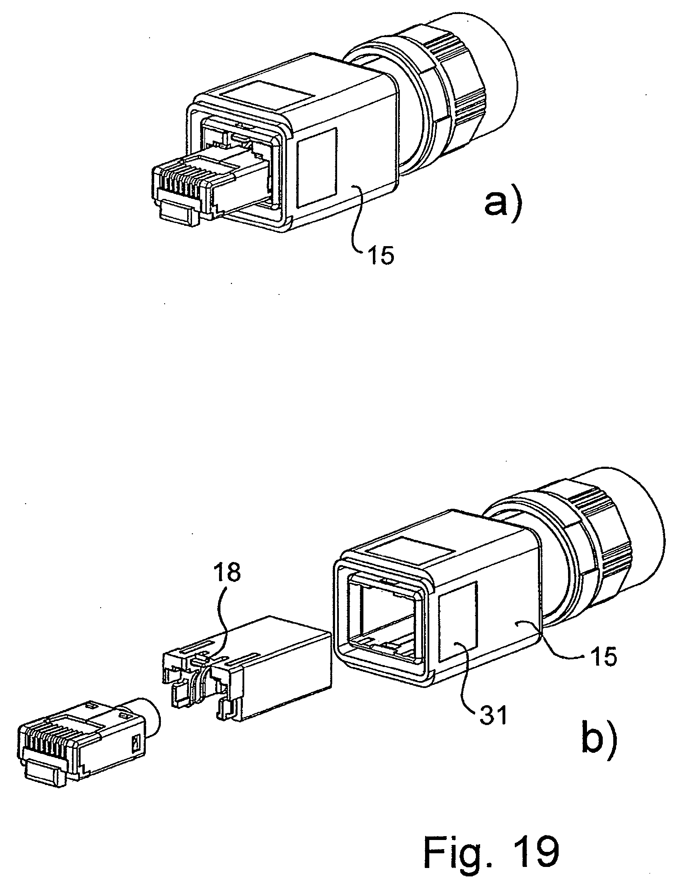

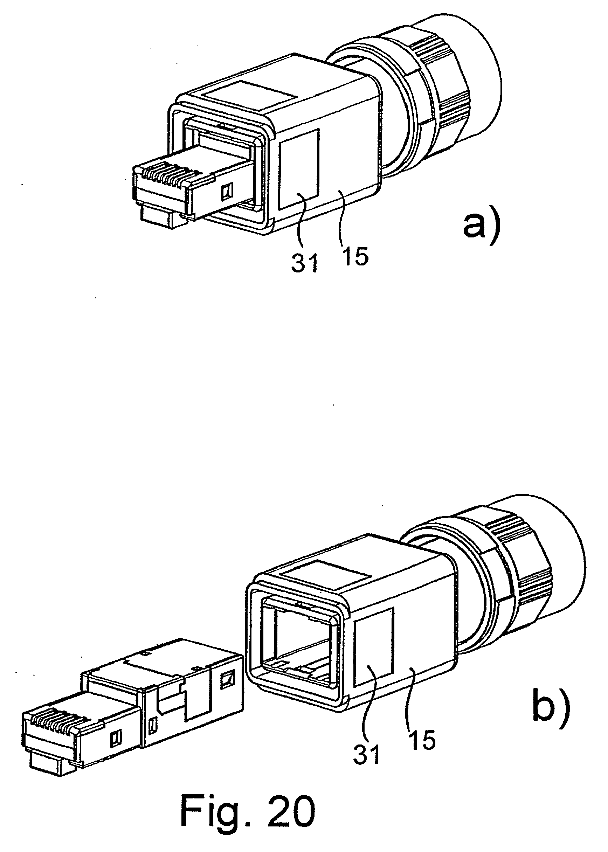

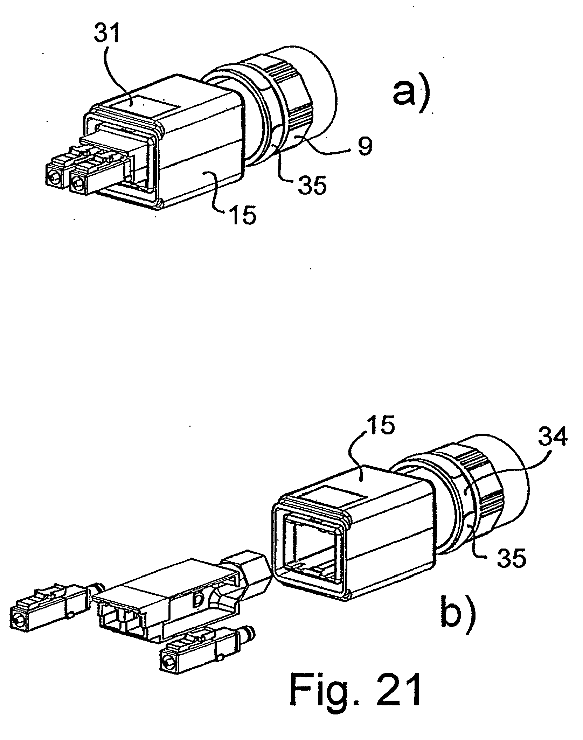

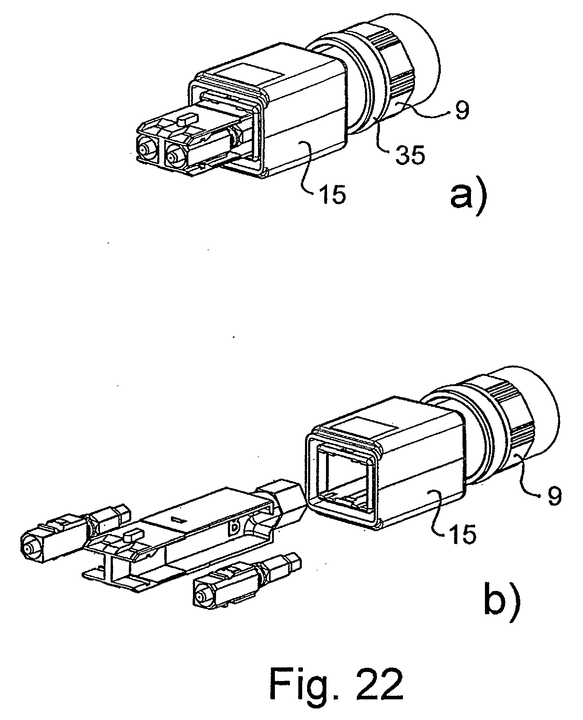

- Fig. 14-22: weitere Ansichten von Adaptern und Elementen von erfindungsgemäßen Adaptern.

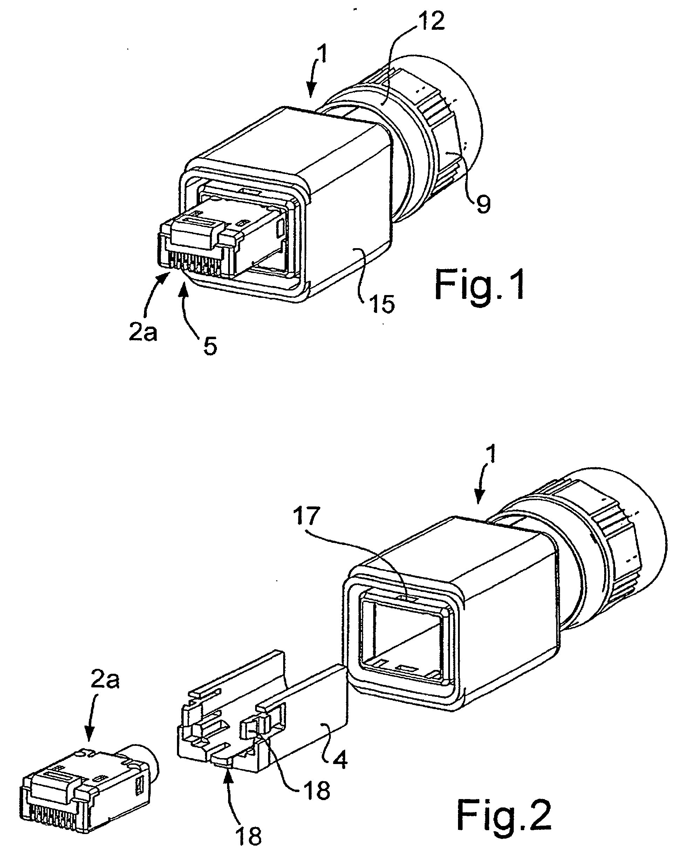

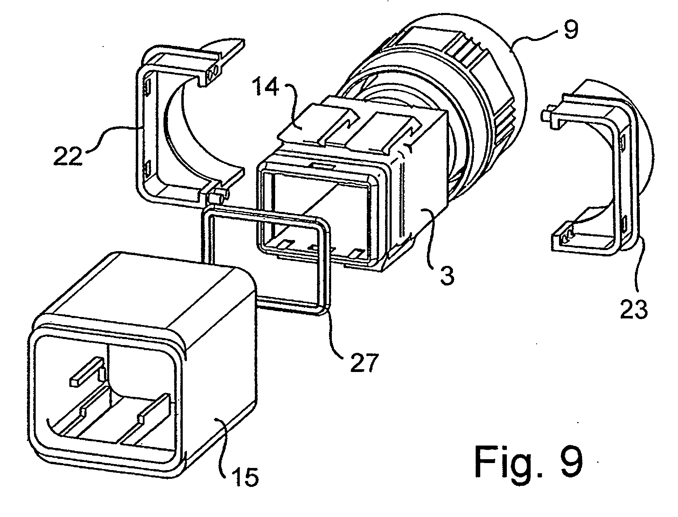

Fig. 1 - 13 zeigen jeweils einen mehrteiligen Adapter 1, in das jeweils ein ein- oder mehrstückiges Steckerteil 2, in Fig. 2 z.B. ein Steckerteil 2a des Büroumfeldes im sogenannten RJ45-Standard, eingesetzt ist. Der Adapter 1 ermöglicht den Einsatz des Steckerteils auch in rauerer Umgebung. Der Begriff Steckerteil ist nicht einschränkend zu verstehen. Es können am Steckerteil Lichtleitelemente, elektrische Stift- und/oder Buchsenkontakte verschiedenster Bauart oder z.B. auch Elemente zur pneumatischen Steckverbindung ausgebildet sein.

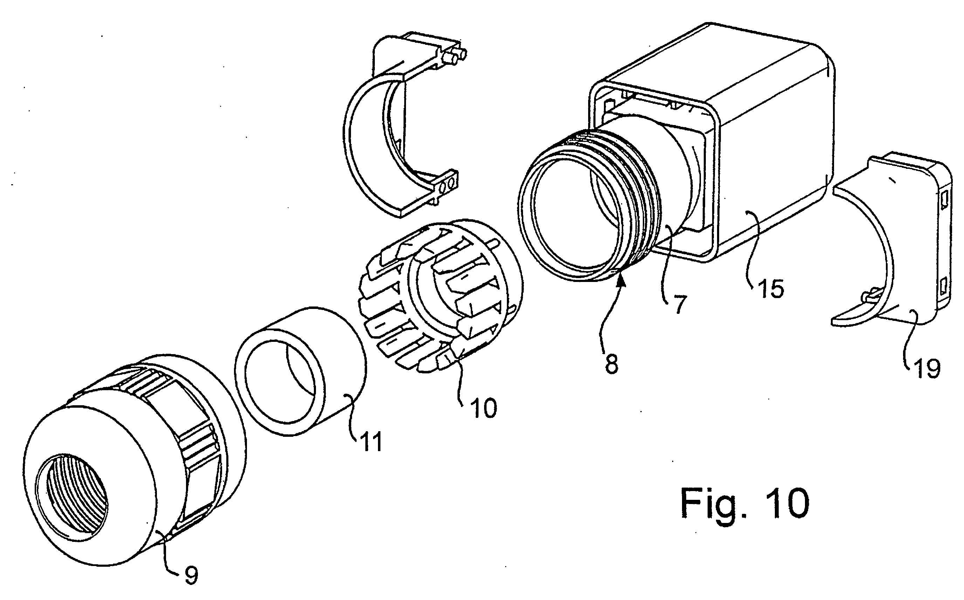

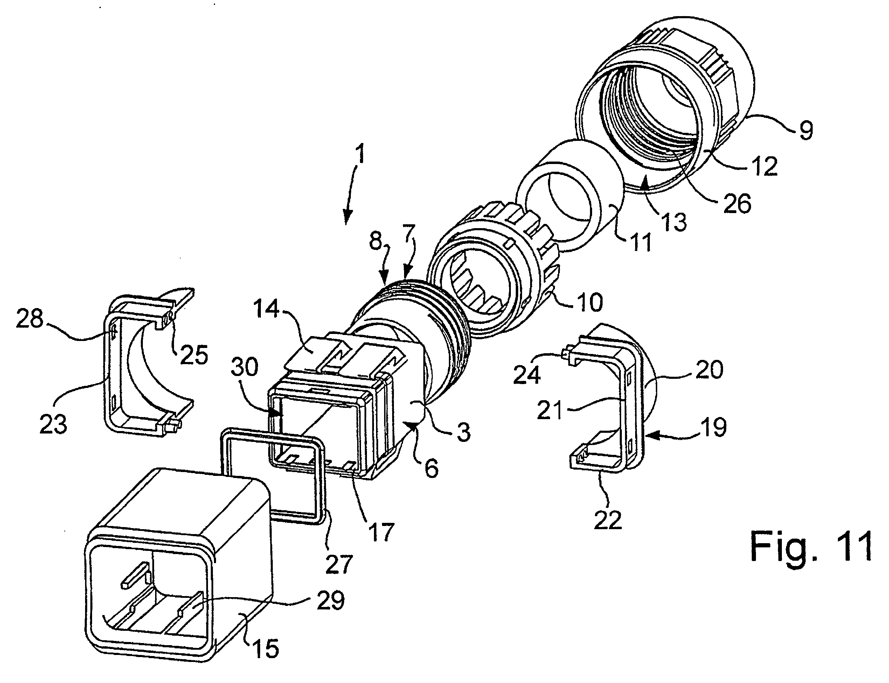

Der Aufbau des optimierten erfindungsgemäßen Adapters 1 erschließt sich am besten aus dem Zusammenspiel der Fig. 10 bis 13, wobei zunächst Fig. 11 beschrieben werden soll.

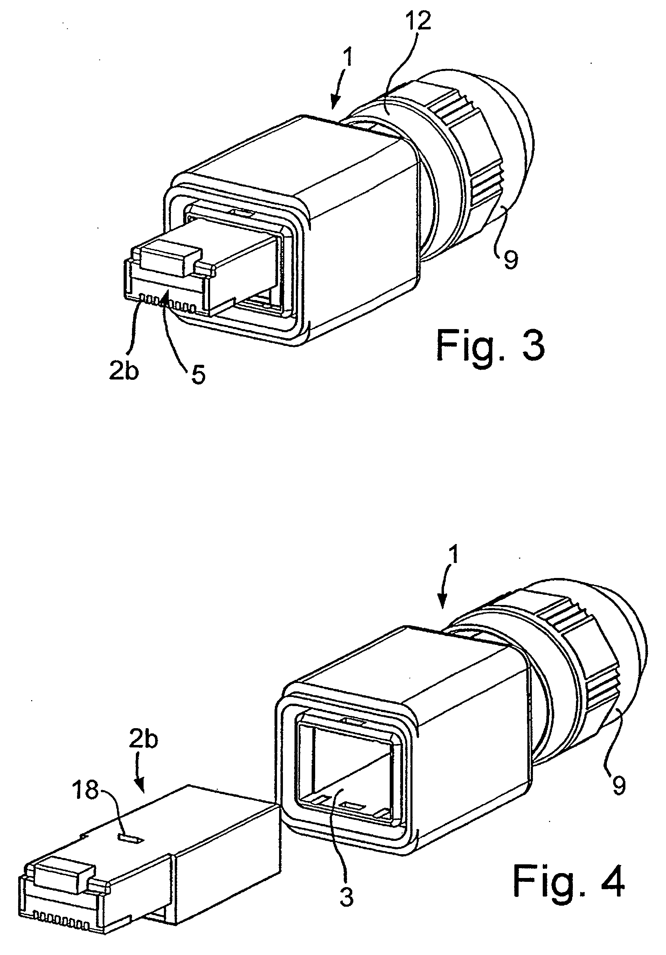

Der Adapter weist danach ein Aufnahmegehäuse 3 auf, das zur rastenden Aufnahme des aufzunehmenden Steckerteils 2 direkt (Fig. 4; Steckerteil 2b) oder über einen Hilfs- bzw. Montagerahmen 4 ausgelegt ist (Fig. 2, 6, 8), in welchen zuvor das/die jeweiligen Steckerteil(e) 2a, 2c, 2d eingesetzt wird/werden.

Das Aufnahmegehäuse 3 ist an seinen beiden Enden hülsenartig offen ausgestaltet.

Eines der offenen Enden wird im montierten Zustand (siehe Fig. 1, 3, 5, 7) vom Steckgesicht 5 des Steckerteils 2 durchsetzt. Das andere offene Ende ist als Durchführung für ein an das Steckerteil angeschlossenes Kabel (letzteres hier nicht dargestellt) ausgebildet.

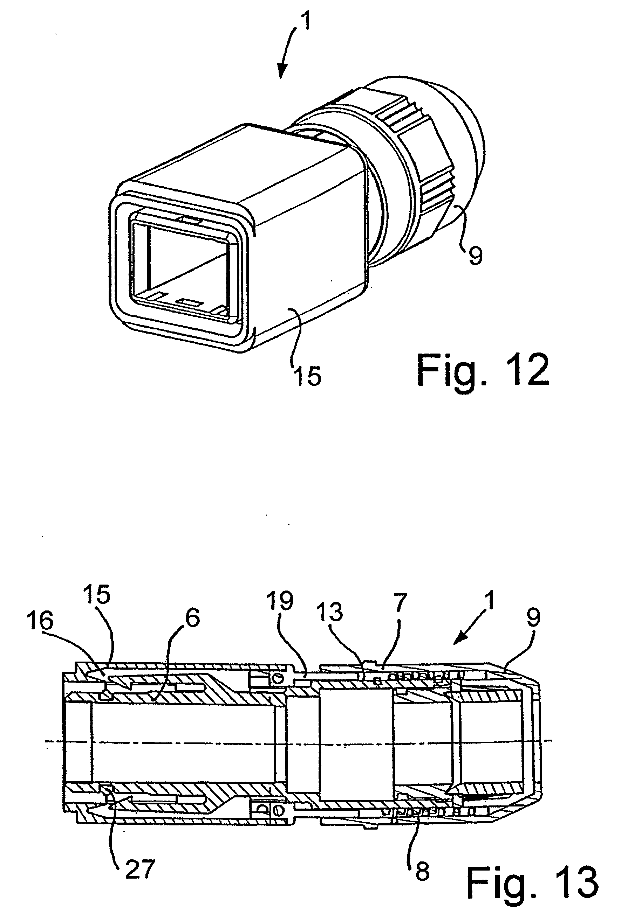

Das Aufnahmegehäuse 3 weist zur Realisierung dieser Funktionen (siehe Fig. 11 und 13) einen vorderen Aufnahmeabschnitt 6 für das Steckerteil 2 auf und einen sich daran direkt einstückig anschließenden zylindrischen Abschnitt 7 mit einem sich über einen hinteren (am vom Abschnitt 6 abgewandten Ende) Teil seiner axialen Länge erstreckenden Außengewinde 8 zum Aufschrauben einer deckelartigen, sich an ihrem von dem Gewindebereich abgewandten Ende verjüngenden Mutter 9 für die Kabeldurchführung, die korrespondierend ein sich über einen Teil ihrer axialen Länge erstreckendes Innengewinde 26 aufweist.

Innerhalb der Mutter 9 können am bzw. im direkten Anschluss an den Abschnitt 7 Funktionselemente wie eine Spannzange bzw. ein Spannring 10 mit einem Dichtring 11 angeordnet sein, die jedenfalls abschnittsweise auch in den Abschnitt 7 eingreifen können. Da sich die Lage der Spannzange 10 mit dem Dichtring 11 damit quasi innerhalb des Gewindes und die Dichtung 11 ganz oder teilweise innerhalb der Spannzange 10 befindet, ist die Länge der Anordnung reduzierbar.

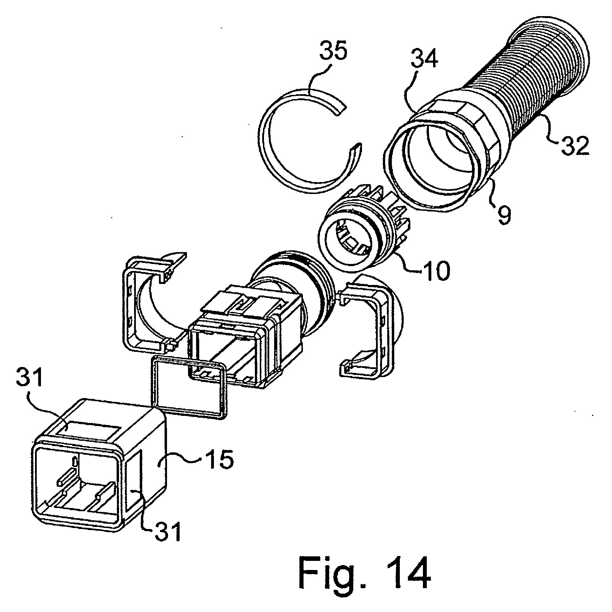

Optional ist ein Knickschutz, insbesondere an oder in der Mutter 9, realisierbar (fig. 14 ff), der z.B. aus Kunststoff oder Metall bestehen kann.

Die Durchführung der erfindungsgemäßen Konstruktion ist ohne weiteres für Kabelmanteldurchmesser von ca. 5 - 10 mm nutzbar.

Die Mutter 9 weist in ihrem zum Steckgesicht hin orientierten Ende einen sich über das Gewindeende axial heraus erstreckenden Hülsenabschnitt 12 auf, der einen etwas größeren Innendurchmesser aufweist als der Außendurchmesser des zylindrischen Abschnittes 7, so dass zwischen dem Innendruchmesser des Hülsenabschnittes 12 und dem Außendurchmesser des zylindrischen Abschnittes 7 ein in Richtung des Steckgesichtes offener und am anderen Ende von dem Gewinde axial verschlossener Ringraum 13 ausgebildet wird (Fig. 11), dem eine zentrale Funktion bei der erreichten Dichtwirkungsoptimierung zukommt (siehe unten), denn es wird ein guter Schutz gegen mechanische und chemische Beanspruchungen realisiert und insbesondere das Eindringen von Schmutz und Feuchtigkeit in den Verriegelungsmechanismus verhindert.

Das Aufnahmegehäuse 3 weist an seiner Außenfläche hier an zwei gegenüber liegenden Seiten Rasthaken 14 zum Zusammenwirken mit einem hier nicht dargestellten Steckergegenstück auf, welches z.B. nach Art des gattungsgemäßen Standes der Technik aufgebaut sein kann. Die Rasthaken 14 entsprechen der von der eingangs genannten Norm geforderten Ausgestaltung. Ihre Funktion korrespondiert mit der inneren Formgebung einer über das Aufnahmegehäuse 3 schiebbaren Schiebehülse 15, welche das Aufnahmegehäuse 3 hülsenartig geschlossen umgibt und bei einem Rückziehen die Rasthaken 14 in ihre korrespondierenden Ausnehmungen 16 zieht. Rippen 29 in der Schiebehülse 15 dienen der Führung des Steckerteils 2 und/oder als Anschlag für die Bewegung der Schiebehülse 15.

Die Schiebehülse 15 weist einen im Wesentlichen rechteckigen Querschnitt auf. Zum Steckgesicht 5 hin ist ein Dichtring 27 zwischen der Schiebehülse 15 und dem Aufnahmegehäuse 3 angeordnet.

An dem Innenumfang und/oder am Außenumfang des Aufnahmegehäuses 3 sind Rastmittel, hier z.B. Rastausnehmungen 17 angeordnet, an denen korrespondierende Rastmittel, hier Rasthaken 18 des Steckerteils oder des Hilfsrahmens 4 verrastbar sind, um das Steckerteil bzw. den Hilfsrahmen am Aufnahmerahmen 3 zu verrasten.

Das Aufnahmegehäuse 3 kann einen inneren Bund aufweisen, der sich dadurch ergibt, dass die Wände des Aufnahmegehäuses 3 abschnittweise im Einführungsbereich bzw. im Bereich der in Fig. 1 bis 8 vorderen Öffnung dünner ausgestaltet sind, um auch breite Steckerteile in das Aufnahmegehäuse 3 einschieben zu können. Die derart zurückgesetzten Seitenwände führen zu einer verbreiterten Öffnung im vorderen Bereich und erleichtern die Aufnahme breiter Steckerteile und deren Montage/Zuführung.

Diese Maßnahme trägt auch entscheidend dazu bei, relativ große Steckerteile im Adapter unterbringen zu können.

An die Schiebehülse 15 schließt sich in Richtung der Mutter 9 unmittelbar eine beispielsweise mit der Schiebehülse 15 rastend verbundene Adapterhülse 19 an, die an ihrem einen Ende einen Hülsenabschnitt 20 aufweist, der in den Ringraum 13 innerhalb des Ansatzes der Mutter 9 eingreift. Am anderen Ende greift sie mit einem Bundansatz 21 an Rastmitteln 28 in das axiale Ende der Schiebehülse ein, wobei es ergänzend denkbar ist, dass Dichtringe und/oder weitere Rastmittel die Adapterhülse 19 an der Schiebehülse 15 und/oder der Mutter 9 (im Ringraum 13) sichern.

Die Adapterhülse 19 kann aus zwei leicht montierbaren Halbschalen 22, 23 bestehen, die miteinander beispielsweise über einen Klemmsitz an Stiften 24 und korrespondierenden Sacklöchern 25 verbunden sind. Alternativ ist auch eine einstückige Ausgestaltung realisierbar (nicht dargestellt, z.B. aus Gummi bzw. einem Elastomer), sofern sie montierbar bzw. entformbar bleibt.

Derart wird auf einfachste Weise insbesondere im Bereich des Ringraumes 13, in welchen die Adapterhülse 19 (bzw. ein Hülsenabschnitt an der Schiebehülse) eingreift, eine gute Schutzwirkung insbesondere gegen das Eindringen von Schmutz und/oder Feuchtigkeit erzielt, die noch von Dichtringen oder weitere Maßnahmen zum Erreichen besonders hoher Schutzklassen gesteigert werden kann.

Optional ist es denkbar, auch die Adapterhülse 19 und die Schiebehülse 15 gemeinsam einstückig auszugestalten (nicht dargestellt). Die Adapterhülse 15, die vorteilhaft und leicht montierbar vorzugsweise aus den zwei Halbschalen 22, 23 besteht, kann ggf. als Zwei-Komponenten-Spritzgießteil mit Dichtringbereichen an ihren Innen- und Außenflächen gefertigt werden.

Nachfolgend werden weitere Vorteile der Konstruktion näher beschrieben.

Da die Steckerteile 2 direkt in dem inneren Aufnahmegehäuse 3 verrastet werden, ergibt sich eine hohe Stabilität der Verrastung. Die vorstehende Öse nebst zugehöriger Zunge des Standes der Technik, die leicht beschädigt werden können, wird vermieden. Die Rastmittel 17, 18 sind zudem vorteilhaft derart außerhalb des Dichtrings 27 zwischen dem Aufnahmerahmen 3 und der Schiebehülse 15 angeordnet, dass ein Entriegeln bzw. Entrasten von außen möglich ist bzw. bleibt.

Um verschiedene Steckerteile 2 dichtend aufzunehmen, ist es lediglich notwendig, entweder die Steckerteile 2 oder die Hilfsrahmen 4 für die Steckerteile 2 mit den notwendigen Verrastungskonturen bzw. Rastmitteln 18 zur Verrastung an den Rastmitteln 17 zu versehen. Als Rastkonturen bzw. -mittel 18 sind Vorsprünge, Rasthaken, ein Loch, Ausnehmungen usw. denkbar, die am Steckerteil 2 ausgebildet werden und sich korrespondierend am Aufnahmegehäuse 3 wieder finden.

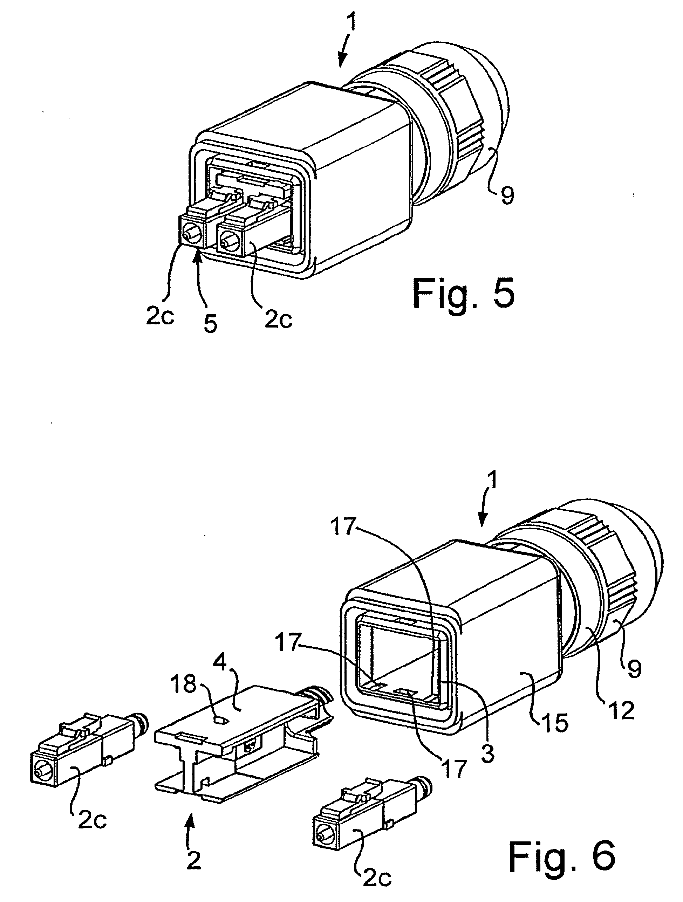

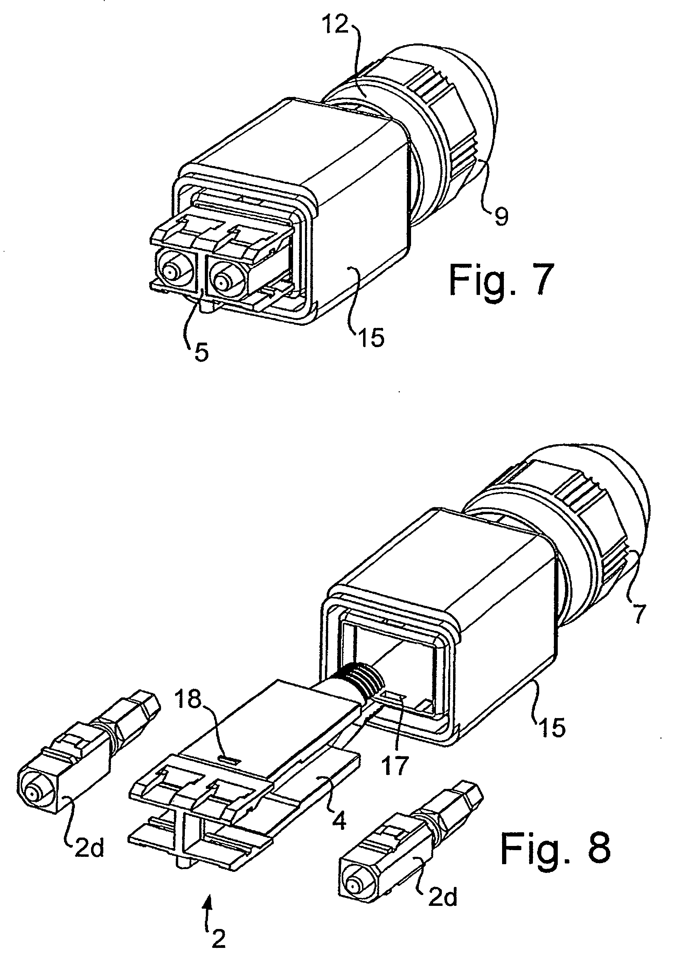

Mit Hilfe des Adapters 1 lassen sich derart auf einfache Weise die Aufnahme eines RJ45-Steckers (Bezugszeichen 2a, Fig. 1, 2) aus dem Office-Umfeld unter zu Hilfenahme des Adapters realisieren. Vorzugsweise sind folgende Stecker aufnehmbar:
- RJ45 8x AWG 27/7-24/7 (Piercing-Kontakte),
- RJ45 8xA WG 26/7-22/7 (IDC-Kontakte),
- LC-Duplex (Fig. 5 und 6),
- 2 x SC-Simplex-Einsätze (im Abstand eines SC-RJ: 7,35mm: Fig. 7 und 8),
- Power-Kontakte,
- USB,
- Firewire,
- KOAX und/oder
- Sensor-/Aktor-Kontakte.

Dabei ist die erfindungsgemäße Anordnung insbesondere zum Einsatz im Sensor-/Aktor- bzw. Feldbustechnikbereich geeignet.

Die Schiebehülse 15 sowie die Adapterhülse 19 und/oder die Mutter 9 und/oder ein optionaler Knickschutz sind wie die Steckerteile 2 als Kunststoff- oder Metallteile oder auch als Verbundteile aus mehreren Materialen realisierbar. Bei der Metallausführung bestehen vorzugsweise alle äußeren Gehäuseteile aus Metall (gegen Schweißperlen und hohe mechanische Beanspruchung). Auch die nicht sichtbare, innere Steckeraufnahme bzw. das Aufnahmegehäuse 3 kann aus Metall bestehen, um hohen mechanischen Anforderungen gerecht zu werden. Je nach Anforderung und Anwendung können auch einzelne der Teile des Adapters aus Kunststoff und andere aus Metall bestehen. Am Aufnahmegehäuse 3 aus Metall bestehen vorzugsweise auch die Rasthaken 14 aus Metall, z.B. aus Federstahl, zur Erhöhung der mechanischen Stabilität. Mischformen (Aufnahmegehäuse 3 aus Kunststoff bzw. Metall und die Adapterhülse aus Metall bzw. Kunststoff sind denkbar).

Die Verriegelungshaken 14 können anstelle über eine Rampe auch über eine Wippe betätigt werden, um die Herstellungskosten zu senken (als low cost - Version, dann ohne Schiebehülse 15 und Adapterhülse 19).

Dem Adapter kann auch ein Arretierungselement zum Verriegeln der Position der Schiebehülse nach dem Einsetzen des Adapters in die Buchse zugeordnet sein. Das Arretierungselement kann als flexibles Ringsegment aus Kunststoff oder Federstahl ausgebildet sein und nach dem Herstellen der Steckverbindung (Adapter 1 mit Steckerteil 2 in Buchse) zwischen Schiebehülse 15 und Mutter 9 aufschnappbar sein. Eine kodierungsartige Farbgebung kann dann auch durch das bzw. am Arretierungselement realisiert sein (hier alles nicht dargestellt).

Vorteilhaft ist es noch, wenn die Mutter 9 aus Metall besteht und/oder dass an der Mutter 9 einstückig eine Zugentlastung, insbesondere schellenartig, angeordnet oder ausgebildet ist.

Vorzugsweise ist die optische Ebene des Steckerteils nach einer vorteilhaften Variante der Erfindung, die auch als unabhängige Erfindung betrachtet werden kann, derart am Adapter 1 ausgebildet, dass ein kupplungsstückfreier Anschluss der lichtführenden Medien (Glas, HCS, POF) zu einem Transceivergehäuse realisierbar ist (hier nicht dargestellt). Um dies zu erreichen, müssen unterschiedliche Dicken/Stärken von Schrank-/Gehäusewänden und unterschiedliche Positionen / Lagen der Transceivergehäuse ausgeglichen werden können. Dies kann funktional gelöst werden, indem die "optische Ebene während der Kabel-/Steckerkonfektion positioniert" werden kann bzw. indem der "Verrastungspunkt des Hilfsrahmens 4 zusätzlich einstellbar im Adapter 1 gestaltet" wird.

Hierzu lässt sich alternativ zur "Standardverrastung in tiefster Position" der Hilfsrahmens 4 auch mit einer abgedichteten Schraube zwischen der Rasthakenbefestigung 14 im Aufnahmegehäuse 3 in nahezu beliebiger Lage weiter vorn positionieren und festsetzen; dann erst wird die Schiebehülse 15 und Adapterhülse 19 montiert.

Hierzu bietet sich ein korrespondierendes Loch für die Befestigungsschraube an. Die Abdichtung lässt sich durch eine Flachdichtung unter dem teilweise abgesenkten Schraubenkopf realisieren.

Vorzugsweise ist das Aufnahmegehäuse 3 mit einem Befestigungsloch für den Hilfsrahmen 4 optional zur Ausführung ohne Befestigungsloch (aus dem gleichen Umbau-WZ realisierbar) bei sonst gleichem konstruktiven Aufbau und Abmessungen des Adapters 1 unter Erfüllung der IEC 61067-3-106 Variante 4 realisiert. Damit ergibt sich ein kupplungsstückfreier Anschluss der lichtführenden Medien durch freie Positionierbarkeit der optischen Ebene im Adapter mittels Befestigungsschraube.

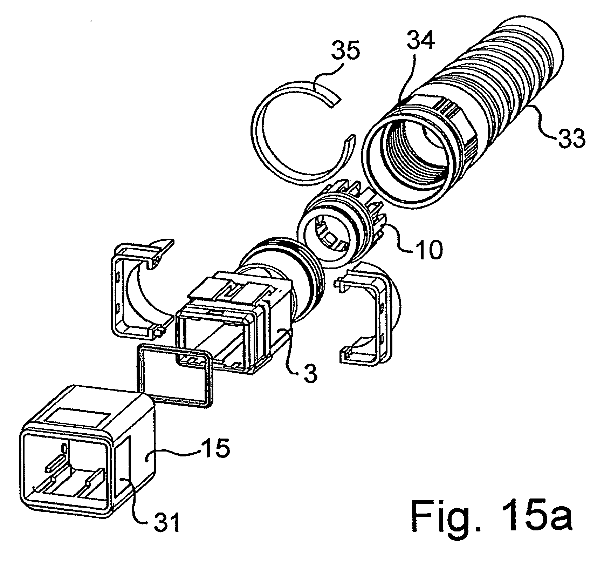

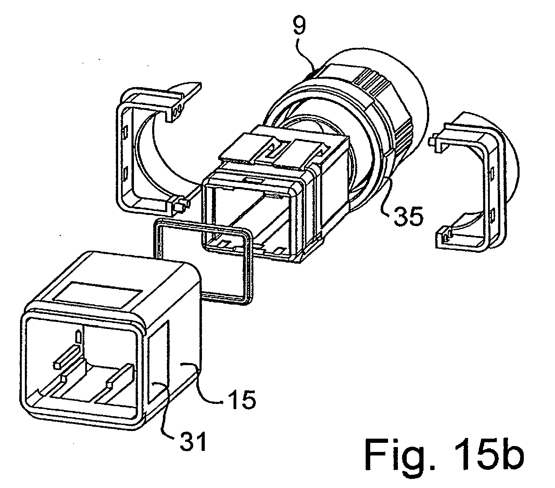

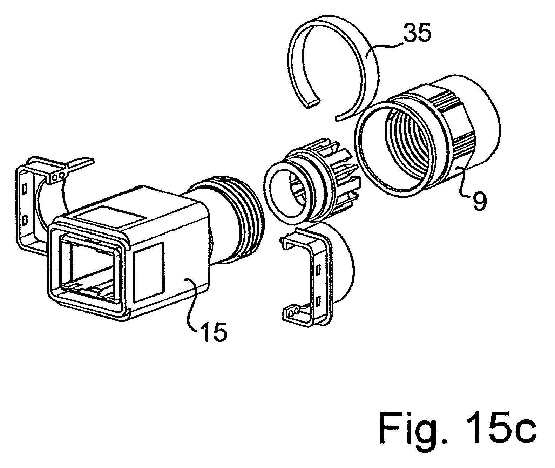

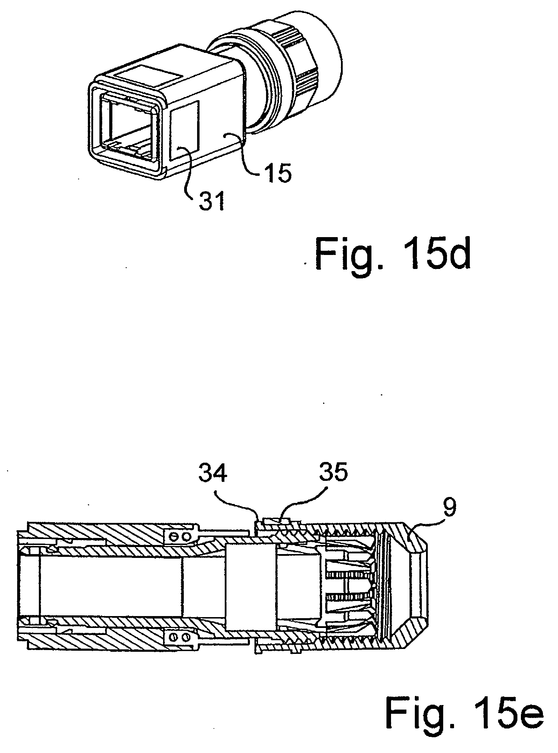

Nach Fig. 14 und 15 und nach einigen der weiteren Figuren sind an der Schiebehülse 15 außen Flächen 31 (Vertiefungen) ausgebildet, die sich zur Aufnahme von Markieren oder dgl. (auch Klebeschildern) eignen.

Fig. 14 und 15 sowie einige der weiteren Figuren offenbaren ferner an der Mutter 9 die bereits weiter vorn erwähnte Knickschutztülle 32, 33 für ein Kabel am Steckerteil 2, die nach Fig. 14 aus Metall und nach Fig. 15 aus Kunststoff besteht.

Die Mutter 9 weist ferner an ihrem Außenumfang eine Nut 34 zur Aufnahme eines vorzugsweise geschlitzten Ringes 35 auf, der z.B. als Farbmarkierung nutzbar ist.
Fig. 14 und 15 zeigen auch eine alternative Ausgestaltung der Spannzange 10 (hier ohne Dichtring 11).

### Bezugszeichen

- Adapter: 1
- Steckerteil: 2
- Bürosteckerteil: 2a,c,d
- Industriesteckerteil: 2b
- Aufnahmegehäuse: 3
- Hilfsrahmen: 4
- Steckgesicht: 5
- Aufnahmeabschnitt: 6
- zylindrischer Abschnitt: 7
- Außengewinde: 8
- Mutter: 9
- Spannzange/Dichtring: 10, 11
- Hülsenabschnitt: 12
- Ringraum: 13
- Rasthaken: 14
- Schiebehülse: 15
- Ausnehmungen: 16
- Rastausnehmungen: 17
- Rasthaken: 18
- Adapterhülse: 19
- Hülsenabschnitt: 20
- Bundansatz: 21
- Halbschalen: 22, 23
- Stiften: 24
- Sacklöcher: 25
- Innengewinde: 26
- Dichtring: 27
- Rastmittel: 28
- Rippen: 29
- Kante: 30
- Flächen: 31
- Knickschutztülle: 32, 33
- Nut: 34
- Ring: 35

## Patentansprüche

1. Adapter zur Aufnahme eines Steckerteils (2), der folgendes aufweist:
a. ein Aufnahmegehäuse (3) zur vorzugsweise rastenden Aufnahme des aufzunehmenden Steckerteils (2), das an seinen beiden Enden hülsenartig offen ausgestaltet ist,
b. wobei eines der offenen Enden im montierten Zustand vom Steckgesicht (5) des Steckerteils (2) durchsetzt ist und das andere offene Ende als Durchführung für ein an das Steckerteil angeschlossenes Kabel ausgebildet ist,
c. wobei das wenigstens eine Steckerteil (2c, d) in einen Hilfsrahmen (4) eingesetzt ist, welcher mitsamt dem Steckerteil in das Aufnahmegehäuse (3) einsetzbar ist,
**dadurch gekennzeichnet, dass**
der Verrastungspunkt des Hilfsrahmens (4) im Adapter (1) einstellbar ausgestaltet ist.

2. Adapter nach Anspruch 1, **dadurch gekennzeichnet, dass** das Aufnahmegehäuse (3) einen vorderen Aufnahmeabschnitt (6) für das Steckerteil (2) aufweist und einen sich daran direkt einstückig anschließenden zylindrischen Abschnitt (7) mit einem sich über einen Teil der axialen Länge erstreckenden Außengewinde (8) zum Aufschrauben einer Mutter (9) für die Kabeldurchführung, die Mutter (9) ein sich über einen Teil ihrer axialen Länge erstreckendes Innengewinde (26) und einen sich über das Gewindeende axial heraus erstreckenden Hülsenabschnitt (12) aufweist, der einen etwas größeren Innendurchmesser aufweist als der Außendurchmesser des zylindrischen Abschnittes (7), so dass zwischen dem Innendurchmesser des Hülsenabschnittes (12) und dem Außendurchmesser des zylindrischen Abschnittes (7) ein in Richtung eines Steckgesichtes (5) offener und am anderen Ende von dem verschraubten Gewinde axial verschlossener Ringraum (13) ausgebildet ist, in den ein Hülsenabschnitt (20) einer Schiebehülse (15) oder einer zwischen der Schiebehülse (15) und der Mutter (9) angeordneten Adapterhülse (19) eingreift.

3. Adapter nach einem der vorstehenden Ansprüche, **dadurch gekennzeichnet; dass** der Hülsenabschnitt (20) der Adapterhülse (19) in den Ringraum (13) innerhalb des Hülsenansatzes (12) der Mutter (9) und an seinem anderen Ende mit einem Bundansatz (21) in das axiale Ende der Schiebehülse (15) eingreift.

4. Adapter nach einem der vorstehenden Ansprüche, **dadurch gekennzeichnet, dass** das Aufnahmegehäuse (3) abschnittweise im Einführungsbereich für das Steckerteil (2) bis zu einer Kante (30) dünnere Wände aufweist als in seinem übrigen Bereich.

5. Adapter nach einem der vorstehenden Ansprüche, **dadurch gekennzeichnet, dass** an dem Innenumfang des Aufnahmegehäuses (3) Rastmittel wie Rastausnehmungen (17), Durchbrüche oder Rasthaken ausgebildet sind, an denen korrespondierende Rastmittel wie Rasthaken (18) des Steckerteils (2) oder des Hilfsrahmens (4) verrastbar sind.

6. Adapter nach einem der vorstehenden Ansprüche, **dadurch gekennzeichnet, dass** der Hilfsrahmen (4) mit einer vorzugsweise abgedichteten Schraube zwischen der Rasthakenbefestigung (14) im Aufnahmegehäuse (3) positionierbar ist.

7. Adapter nach einem der vorstehenden Ansprüche, **dadurch gekennzeichnet, dass** der Hilfsrahmen im Aufnahmegehäuse (3) verrastbar ist

8. Adapter nach einem der vorstehenden Ansprüche, **dadurch gekennzeichnet, dass** einige der Steckerteile (2) mit dem Hilfsrahmen (4) im Aufnahmegehäuse (3) befestigbar sind und dass weitere, anders gestaltete Steckerteile direkt ohne Hilfsrahmen (4) in das Aufnahmegehäuse (3) einsetzbar und dort verrastbar sind.

9. Adapter nach einem der vorstehenden Ansprüche, **dadurch gekennzeichnet, dass** sich an die Schiebehülse (15) in Richtung der Mutter (9) unmittelbar die mit der Schiebehülse rastend verbundene Adapterhülse (19) anschließt.

10. Adapter nach einem der vorstehenden Ansprüche oder nach dem Oberbegriff des Anspruchs 1, **dadurch gekennzeichnet, dass** die Schiebehülse (15) sowie ggf. die Adapterhülse (19) und/oder die Mutter (9) und/oder das Aufnahmegehäuse (3) aus Metall bestehen.

11. Adapter nach einem der vorstehenden Ansprüche, **dadurch gekennzeichnet, dass** am Aufnahmegehäuse (3) an der Außenfläche Rasthaken (14) ausgebildet sind.

12. Adapter nach einem der vorstehenden Ansprüche, **dadurch gekennzeichnet, dass** das Aufnahmegehäuse (3) aus Kunststoff oder Metall besteht.

13. Adapter nach einem der vorstehenden Ansprüche, **dadurch gekennzeichnet, dass** am Aufnahmegehäuse (3) aus Kunststoff Rasthaken (14) aus Metall angebracht sind.

14. Adapter nach einem der vorstehenden Ansprüche, **dadurch gekennzeichnet, dass** am Aufnahmegehäuse (3) aus Metall Rasthaken (14) aus Metall, insbesondere Federstahl angebracht sind.

## Claims

1. An adapter for accommodating a male connector part (2), which comprises the following:
a. a holder housing (3) for accommodating in a preferably latching manner the male connector part (2) to be accommodated, said holder housing being of open, sleeve-like configuration at both ends;
b. wherein in the assembled condition one of the open ends is penetrated by the plug face (5) of the male connector part (2) and the other open end is formed as a duct for a cable connected to the connector part;
c. wherein the at least one male connector part (2c, 2d) is inserted into an auxiliary frame (4) which can be inserted into the holder housing (3) together with the male connector part;
**characterized in that**
the latching point of the auxiliary frame (4) in the adapter (1) is arranged to be adjustable.

2. An adapter according to claim 1, **characterized in that** the holder housing (3) comprises a a front holding section (6) for the male connector part (2) and a cylindrical section (7) directly joined integrally thereto, with an external thread (8) that extends over part of its axial length for screwing on a nut (9) for the cable duct, the nut (9) comprises an inner thread (26) which extends over part of its axial length and a sleeve section (12) which extends axially beyond the end of the thread and is provided with an inside diameter which is slightly larger than the external diameter of the cylindrical section (7), so that between the inside diameter of the sleeve section (12) and the external diameter of the cylindrical section (7) an annular space (13) is formed which is axially open in the direction of the connector plug face (5) and closed at the other end by the screwed-on thread, in which engages a sleeve section (20) of a sliding sleeve (15) or an adapter sleeve (19) arranged between the sliding sleeve (15) and the nut (9).

3. An adapter according to one of the preceding claims, **characterized in that** the sleeve section (20) of the adapter sleeve (19) engages in the annular space (13) within the sleeve extension (12) of the nut (9) and at its other end with a collar attachment (21) in the axial end of the sliding sleeve (15).

4. An adapter according to one of the preceding claims, **characterized in that** the holder housing (3) comprises thinner walls in sections in the insertion area for the male connector part (2) up to an edge (30) than in its other areas.

5. An adapter according to one of the preceding claims, **characterized in that** latching means such as latching recesses (17), perforations or latching hooks are formed on the inside circumference of the holder housing (3), on which corresponding latching means such as latching hooks (18) of the male connector part (2) or the auxiliary frame (4) can be latched.

6. An adapter according to one of the preceding claims, **characterized in that** the auxiliary frame (4) can be positioned by means of a preferably sealed screw between the latching hook fixture (14) in the holder housing (3).

7. An adapter according to one of the preceding claims, **characterized in that** the auxiliary frame can be latched in the holder housing (3).

8. An adapter according to one of the preceding claims, **characterized in that** some of the male connector parts (2) can be fixed with the auxiliary frame (4) in the holder housing (3), and other, differently designed connector parts can be inserted directly into the holder housing (3) without an auxiliary frame (4) and can be latched therein.

9. An adapter according to one of the preceding claims, **characterized in that** the adapter sleeve (19) which is connected to the sliding sleeve in a latching manner is directly adjacent to the sliding sleeve (15) in the direction of the nut (9).

10. An adapter according to one of the preceding claims or according to the preamble of claim 1, **characterized in that** the sliding sleeve (15) and optionally the adapter sleeve (19) and/or the nut (9) and/or the holder housing (3) consist of metal.

11. An adapter according to one of the preceding claims, **characterized in that** latching hooks (14) are formed on the outside surface of the holder housing (3).

12. An adapter according to one of the preceding claims, **characterized in that** the holder housing (3) is made of plastic or metal.

13. An adapter according to one of the preceding claims, **characterized in that** latching hooks (14) made of metal are attached to the holder housing (3) which is made of plastic.

14. An adapter according to one of the preceding claims, **characterized in that** latching hooks (14) made of metal, especially spring steel, are attached to the holder housing (3) made of metal.

## Revendications

1. Adaptateur destiné à recevoir la partie mâle (2) d'un connecteur comprenant :
a) un boitier récepteur (3) destiné à recevoir, de préférence par encliquetage, la partie mâle (2) du connecteur à recevoir, qui est ouvert en forme de manchon au niveau de ses deux extrémités,
b) à l'état monté, l'une des extrémités ouvertes étant traversée par la face enfichable (5) de la partie mâle (2) du connecteur tandis que l'autre extrémité ouverte est réalisée sous la forme d'un passage pour un câble connecté à cette partie mâle,
c) une ou plusieurs partie(s) mâle(s) (2c, d) du connecteur étant insérée(s) dans un châssis secondaire (4) pouvant être inséré avec la partie mâle du connecteur dans le boitier récepteur (3),
**caractérisé en ce que**
le point d'encliquetage du châssis secondaire (4) dans l'adaptateur (1) est réglable.

2. Adaptateur conforme à la revendication 1,
**caractérisé en ce que**
le boitier récepteur (3) comporte un tronçon de réception avant (6) de la partie mâle (2) du connecteur ainsi qu'un tronçon cylindrique (7) directement connecté à celui-ci d'un seul tenant (16) et comprenant un filetage externe (8) s'étendant sur une partie de sa longueur axiale pour permettre de visser un écrou (9) pour le passage de câble, cet écrou (9) comportant un filetage interne (26) s'étendant sur une partie de sa longueur axiale et un tronçon de manchon (12) s'étendant axialement vers l'extérieur sur l'extrémité du filetage et présentant un diamètre un peu supérieur au diamètre externe du tronçon cylindrique (7) de sorte que, entre le diamètre interne du tronçon de manchon (12) et le diamètre externe du tronçon cylindrique (7) soit formé un espace annulaire (13) ouvert dans la direction de la face d'enfichage (5) et fermé axialement à son autre extrémité par le filetage vissé, dans lequel vient en prise un tronçon de manchon (20) d'un manchon coulissant (15) ou d'un manchon adaptateur (19) monté entre le manchon coulissant (15) et l'écrou (9).

3. Adaptateur conforme à l'une des revendications précédentes,
**caractérisé en ce que**
le tronçon de manchon (20) du manchon adaptateur (19) vient en prise dans l'espace annulaire (13) à l'intérieur de la saillie de manchon (12) de l'écrou (9) et, à son autre extrémité avec un taquet (21) dans l'extrémité axiale du manchon coulissant (15).

4. Adaptateur conforme à l'une des revendications précédentes,
**caractérisé en ce que**
le boitier récepteur (3) présente par sections dans la zone d'introduction de la partie mâle (2) du connecteur jusqu'à un bord (30) des parois plus minces que dans son autre zone.

5. Adaptateur conforme à l'une des revendications précédentes,
**caractérisé en ce que**
sur la périphérie interne du boitier de récepteur (3) sont formés des moyens d'encliquetage tels que des évidements d'encliquetage (17), des ajours ou des crochets d'encliquetage sur lesquels des moyens d'encliquetage correspondants tels que des crochets d'encliquetage (18) de la partie mâle (2) du connecteur ou du châssis secondaire (4) peuvent être encliquetés.

6. Adaptateur conforme à l'une des revendications précédentes,
**caractérisé en ce que**
le châssis secondaire (4) peut être positionné avec une vis de préférence d'étanchéité entre l'attache du crochet d'encliquetage (14) dans le boitier récepteur (3).

7. Adaptateur conforme à l'une des revendications précédentes,
**caractérisé en ce que**
le châssis secondaire peut être encliqueté dans le boitier récepteur (3).

8. Adaptateur conforme à l'une des revendications précédentes,
**caractérisé en ce que**
certaines des parties mâles (2) du connecteurs peuvent être fixées avec le châssis secondaire (4) dans le boitier de réception (3), tandis que d'autres parties mâles du connecteur ayant une configuration autre peuvent être insérées directement et sans châssis auxiliaire (4) dans le boitier récepteur (3) et y être encliquetées.

9. Adaptateur conforme à l'une des revendications précédentes,
**caractérisé en ce que**
le manchon adaptateur (19) encliqueté sur le manchon coulissant se raccorde directement à ce manchon coulissant (15) en direction de l'écrou (9).

10. Adaptateur conforme à l'une des revendications précédentes ou au préambule de la revendication 1,
**caractérisé en ce que**
le manchon coulissant (15) ainsi que le cas échéant le manchon adaptateur (19) et/ou l'écrou (9) et/ou le boitier récepteur (3) sont réalisés en métal.

11. Adaptateur conforme à l'une des revendications précédentes,
**caractérisé en ce que**
sur la surface externe du boitier récepteur (3) sont formés des crochets d'encliquetage (14).

12. Adaptateur conforme à l'une des revendications précédentes,
**caractérisé en ce que**
le boitier récepteur (3) est réalisé en matériau synthétique ou en métal.

13. Adaptateur conforme à l'une des revendications précédentes,
**caractérisé en ce que**
sur le boitier récepteur (3) en matériau synthétique sont montés des crochets d'encliquetage (14) en métal.

14. Adaptateur conforme à l'une des revendications précédentes,
**caractérisé en ce que**
sur le boitier récepteur (3) en métal sont montés des crochets d'encliquetage (14) en métal, et en particulier en acier à ressort.
